(19)

Europäisches Patentamt
European Patent Office
Office européen des brevets

(11)　**EP 2 839 399 B1**

(12)　　　　　　　**EUROPEAN PATENT SPECIFICATION**

(45) Date of publication and mention
of the grant of the patent:
**25.12.2019　Bulletin 2019/52**

(51) Int Cl.:
*G01C 21/20* *(2006.01)*　　*G01C 21/32* *(2006.01)*
*G05B 15/00* *(2006.01)*　　*G05D 1/02* *(2006.01)*

(21) Application number: **13843954.2**

(22) Date of filing: **23.09.2013**

(86) International application number:
**PCT/US2013/061208**

(87) International publication number:
**WO 2014/055278 (10.04.2014 Gazette 2014/15)**

(54) **ADAPTIVE MAPPING WITH SPATIAL SUMMARIES OF SENSOR DATA**

ADAPTIVE ZUORDNUNG MIT RÄUMLICHEN ZUSAMMENFASSUNGEN VON SENSORDATEN

CARTOGRAPHIE ADAPTATIVE AVEC RÉSUMÉS SPATIAUX DE DONNÉES DE CAPTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2012　US 201213632997**

(43) Date of publication of application:
**25.02.2015　Bulletin 2015/09**

(60) Divisional application:
**15200594.8 / 3 018 603**

(73) Proprietor: **iRobot Corporation
Bedford, MA 01730 (US)**

(72) Inventors:
• **FONG, Philip
Pasadena, CA 91106 (US)**
• **EADE, Ethan
Pasadena, CA 91106 (US)**
• **MUNICH, Mario E.
Pasadena, CA 91106 (US)**

(74) Representative: **Peterreins Schley
Patent- und Rechtsanwälte
Hermann-Sack-Strasse 3
80331 München (DE)**

(56) References cited:
**EP-A2- 2 450 762　　US-A1- 2004 122 587
US-A1- 2005 182 518　US-A1- 2005 238 200
US-A1- 2010 020 093　US-A1- 2010 070 078
US-A1- 2010 070 078　US-B2- 7 135 992**

**Description**

CROSS-REFERENCE TO RELATED APPLICATIONS

This application claims the benefit of U.S. Provisional Patent Application Serial No. 61/541,749 filed September 30, 2011, titled "Adaptive mapping with spatial summaries of sensor data".

BACKGROUND OF THE INVENTION

Field of the Invention

The invention relates to a technique for generating a map of an environment using a plurality of sub-maps. In particular, the invention relates to a system and method for combining sensor data into a plurality of sub-maps based upon the location of the sensor when the data was acquired and the certainty with its location was known.

Description of the Related Art

In the past few years, a substantial research effort has been devoted to the problem of Simultaneous Localization and Mapping (SLAM). The term "map" in the field of SLAM generally refers to a spatial arrangement of observed landmarks or features. If these landmarks correspond to obstacle locations (such as the measurements collected with a Laser Range Finder), then the "map" yields an occupancy map denoting the floor plan of the space in which the robot is operating. In other cases, in which the landmark information does not correspond to obstacle locations (such as the measurements taken with a camera), the "map" estimated with SLAM techniques is dissociated from the locations of obstacles (occupancy map). However, an occupancy map is required for the robot to properly make decisions and navigate the environment.

A number of SLAM techniques have been proposed for simultaneously estimating the poses (i.e. localization) and building the map. Some methods re-estimate past poses instead of only the latest pose as new information is collected, achieving an improvement in the estimate of the robot trajectory as the localization system is updated. Laser scans, for example, are collected as a mobile robot moves through an indoor environment. These scans are combined with odometry information to estimate the robot's trajectory to yield a map showing the floor plan of the building. As more information is collected, the accuracy of the map improves because the estimates of the past poses of the robot are improved. A disadvantage of this system is that all sensor readings and their associated poses must be stored to allow the sensor data to be re-processed when new information arrives. This results in storage requirements that grow linearly with time. There is therefore a need for a localization and mapping technique that efficiently creates an occupancy map using new information to improve accuracy of the map without the storage requirement growing linearly with time.

US7135992 discloses a method of mapping which uses visual sensors and dead reckoning sensors to process SLAM. One embodiment uses multiple hypothesis or particles with respect to location and mapping. Each landmark is associated with a landmark pose estimate and a uncertainty measure.

EP2450762 discloses a method for controlling a robot, wherein a full map of the cleaning region is generated based on a position of a partial map with respect to each sector and a topological relationship between the partial maps. The robot cleaner compares features lines of the current sector and a most overlapping sector with each other and calculates a position error based on the identical feature lines.

US2010/0070078 discloses an apparatus for building a map including a obstacle map builder, a controller for building a feature map comprising a plurality of features, position information of the features, and information regarding degrees of uncertainty of the features on the basis of an amount of change in posture and an image obtained while a mobile robot moves. The information regarding uncertainty is used in order to select the path of the robot.

The present invention features a method of mapping parameters according to claim 1.

SUMMARY OF THE INVENTION

The invention in the preferred embodiment features a method for mapping parameter data acquired by a robotic system using a SLAM module in an environment according to appended claim 1. By using this method, the robot can limit the memory requirements necessary to map the environment without the memory requirements growing linearly in time.

BRIEF DESCRIPTION OF THE DRAWINGS

The present invention is illustrated by way of example and not limitation in the figures of the accompanying drawings, and in which:

FIG. 1 is a functional block diagram of a robotic system, in accordance with the preferred embodiment of the present invention;

FIG. 2A is a diagrammatic illustration of the of a mobile robotic system in a global reference frame, in accordance with the preferred embodiment of the present invention;

FIG. 2B is a diagrammatic illustration of a local grid at a location coinciding with an anchor node in the global reference frame, in accordance with the preferred embodiment of the present invention;

FIG. 3A is a robot trajectory showing nodes and corresponding sensor data, in accordance with the preferred embodiment of the present invention;

FIG. 3B is a robot trajectory showing an anchor node and summary of sensor data, in accordance with the preferred embodiment of the present invention;

FIG. 3C is a robot trajectory showing an anchor node and summary of sensor data, in accordance with the preferred embodiment of the present invention;

FIG. 4 is a flowchart showing process of summarizing sensor data, in accordance with the preferred embodiment of the present invention;

FIG. 5A is a robot trajectory showing nodes, in accordance with the preferred embodiment of the present invention;

FIG. 5B shows a plurality of local parameter grids, in accordance with the preferred embodiment of the present invention;

FIG. 6A is a robot trajectory showing nodes, in accordance with the preferred embodiment of the present invention;

FIG. 6B shows a plurality of local parameter grids, in accordance with the preferred embodiment of the present invention;

FIG. 7A is an occupancy map depicting clear spaces in the environment explored by the robotic system, in accordance with the preferred embodiment of the present invention;

FIG. 7B is an occupancy map depicting obstacles in the environment explored by the robotic system, in accordance with the preferred embodiment of the present invention; and

FIG. 8 is a flowchart of the process of concurrent localization and parameter mapping, in accordance with the preferred embodiment of the present invention.

## DETAILED DESCRIPTION OF THE PREFERRED EMBODIMENT

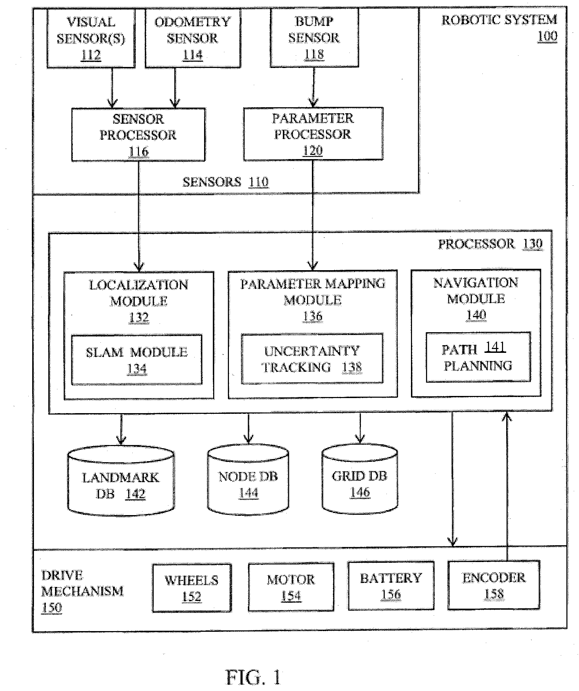

Illustrated in FIG. 1 is a functional block diagram of a mobile robotic system configured to generate spatial summaries as described in more detail below. The robotic system 100 includes one or more sensors 110, a central processing unit 130, one or more databases for storing relevant data, and a drive mechanism 150 including drive wheels 152, for example. The one or more sensors 110 include one or more visual sensors 112, i.e., cameras, video cameras, imagers including CCD imagers, CMOS imagers, and infrared imagers, for example, for acquiring images of the environment in which the robot is roving. The set of sensors in the preferred embodiment also includes one or more wheel odometers 158 for measuring the rotation of the wheels of the drive system. The set of sensors may further include one or more bump sensors 118 for generating a signal indicating the presence of an obstacle in the path of the mobile robot.

Data from the sensors 112, 114 may undergo preprocessing at processing unit 116. For example, the processing unit 116 may extract visual features from the image data for purposes of recognizing known landmarks, and process odometry data to convert wheel encoder signals or other odometry data to distance and rotation estimates. In some embodiments, odometry data may be used to detect and compensate for situations in which the drive wheels slip due to wet, slick, or carpeted surfaces. Data from the bump sensor 118 may undergo preprocessing at the processing unit 120 to determine when the robot encounters and obstacle as well as the position of the obstacle with respect to the robot path.

In other embodiments, the set of sensors 110 includes range finders, including laser, infrared (IR), and acoustic range finders; proximity sensors including lateral proximity sensors for determining lateral distance to objects in the environment; drop sensors for detecting staircases and other locations that are unsuitable for travel by the robot; and floor surface sensors, including sensors for measuring dirt concentration, slippage, and soil characteristics.

The mobile robot system 100 further includes at least one processor 130 configured to perform one or more of localization, generate maps of properties characterizing the environment in which the robot is operating, and navigate through the environment. In the preferred embodiment, the processor 130 includes a localization module 132 which determines the location of landmarks as well as the mobile robot with visual and odometry data using a technique called Simultaneous Localization and Mapping (SLAM) 134 taught in patent no. 7,135,992. Using this technique, the robotic system explores its environment, takes numerous images of its environment, makes a map depicting landmarks in the environment, and estimates the location of the robot relative to those landmarks.

An example process that can be used in a visual front end for visual processing is described in patent no.

7,135,992. As described, as a robot with VSLAM moves in an environment, the robot analyzes the physical landmarks that it observes. Recognized landmarks can be used to localize the robot within one or more maps. Newly-created landmarks can be added to one or more maps. The act of creating a new landmark may also be referred to as "generating" a landmark. It will be appreciated by the skilled practitioner that the process can be modified in a variety of ways. For example, in another embodiment, various portions of the process can be combined, can be rearranged in an alternate sequence, can be removed, and the like. In addition, it should be noted that the process can be performed in a variety of ways, such as by software executing in a general-purpose computer, by firmware executed by a microprocessor, by dedicated hardware, and the like.

The process begins by retrieving an image from the visual sensor or applicable data buffer. At this point in the process, multiple viewpoints are not used. For example, where the visual sensor for the robot corresponds to multiple cameras, one image from the camera can be selected for analysis. It will be understood that the image can also be related to a timestamp, which can permit other processes to reference appropriate data from the dead reckoning sensors to the image.

The process generates a list of matching landmarks. For example, the process can extract feature descriptors from the image, such as SIFT feature vectors, and compare the extracted features to features for landmarks that had previously been observed and stored. For example, features for landmarks can be stored in a landmark database. In one embodiment, an optional object recognition table is used for relatively fast searching of feature descriptors. In one embodiment, the landmarks with one or more matching landmarks are identified by a list, such as a list of landmark identifiers, for further analysis.

A loop process begins. The loop further compares the features of the matching landmarks identified by the list to features of the observed image. It will be understood that where no matching landmarks are identified, the process can skip the execution of the loop and proceed to the end of the loop.

For each matching landmark, the loop begins at a decision block. In the decision block, the process compares the number of features that match between the image and the matching landmark. The process uses the detected features to estimate a relative pose to the landmark. In one embodiment, the number of features detected is compared to a predetermined number corresponding to the minimum number of features needed to solve the structure and motion problem. It will be understood that the minimum number of features can depend on the technique used to solve the structure and motion problem. For example, where the structure and motion problem is resolved using the trifocal tensor method, the minimum number of features for convergence of a solution is about 5. The process proceeds from the decision block when there are enough matching features for the landmark. Otherwise, the process proceeds to the end of the loop to return to process further landmarks or to exit out of the loop.

The process computes the camera pose of the robot with respect to the landmark reference frame. The camera pose corresponds to the relative pose, such as $\Delta x$, $\Delta y$, and $\Delta \theta$, between the pose corresponding to the image retrieved and the landmark pose for the matched landmark. It will be understood that the relative pose computation can include further dimensions, such as a change in vertical component ($\Delta z$), roll, and pitch, and that the relative pose can also be represented in other coordinate system forms.

The skilled practitioner will appreciate that many techniques can be used to compute the relative pose. One computationally-efficient technique to compute the relative pose is to calculate the relative pose that results in a relatively small projection error, such as the minimum projection error.

In one embodiment, the process retrieves the 3-D coordinates for the features of the landmark from a data store, such as from a feature table 804 of the landmark database. From the 3-D coordinates, the process shifts a hypothetical pose (relative to the landmark pose) and calculates new 2-D image coordinates by projection from the 3-D coordinates and the change in pose. In one embodiment, the relative pose is determined by searching in a six-dimensional 3-D pose space, such as, for example, $x$, $y$, $z$, roll, pitch, and yaw ($\theta$) for a point with a relatively small root mean square (RMS) projection error between the presently-measured feature coordinates and the projected coordinates from the 3-D feature to the image. The process advances to a decision block.

Iterative computations for finding numerical solutions can be used to compute the relative pose. It should be noted that such techniques do not always converge to a result. When convergence is achieved, that is, the landmark match is relatively good, the process proceeds from the decision block and stores information relating to the matched landmark. Otherwise, the process proceeds from the decision block to the end of the loop. Of course, it will be understood that other techniques, such as relatively computationally inefficient brute force techniques, can also be used to calculate a relative pose with a relatively small projection error.

The process stores results relating to the matched landmark such that the results can be provided to a pre-filtering process and/or directly to SLAM processes. In one embodiment, the match results for a landmark include the landmark identifier for the evaluated landmark, the calculated camera pose, a root mean square (RMS) value of the projection error for the calculated camera pose, the number of matching features, and a computation of slope. In one embodiment, the storing of one or more of the computation of the RMS value of the projection error, the number of matching features, and the computation of slope is optional and is provided when one or more of these metrics are used by pre-filtering processes. The process can store these metrics such that later re-computation of one or more of the results can advantageously be avoided. The process advances to the end of the loop, where the process returns to the beginning of the loop to process further matching landmarks or proceeds to a decision block when done with processing matching landmarks.

The process determines whether there has been at least one converging solution to solving for the relative pose or camera pose, e.g., $\Delta x$, $\Delta y$, and $\Delta\theta$. For example, in one embodiment, the process determines whether there has been at least one converging solution for at least one of the landmarks that were identified to be matching.

When there has been at least one convergence, this indicates that there has been at least one relatively "good" match between what was observed by the robot and at least one of the landmarks in the database, and the process provides the match results previously stored to Pre-Filtering processes and/or to SLAM processes such that the matched landmarks can be used to localize the robot within the global reference frame. Advantageously, this information can be used by a SLAM process to correct for drift in the dead reckoning information. The match results can include match results for one or more landmarks. When a plurality of landmarks are identified in a single image, one embodiment of the SLAM process can process all of the plurality.

At this point in the process, the process has determined that there are no relatively "good" matches between what was observed by the robot and the landmarks in the database, and the process proceeds to landmark creation processes.

A process will be described that optionally can be used in a visual front end when recognizing a new physical landmark in the environment and creating a corresponding landmark in one or more maps in a database. The act of creating a new landmark may also be referred to as "generating" a landmark. It will be appreciated by the skilled practitioner that the illustrated process can be modified in a variety of ways without departing from the scope of the invention. For example, in another embodiment, various portions of the illustrated process can be combined, can be rearranged in an alternate sequence, can be removed, and the like. In addition, it should be noted that the process can be performed in a variety of ways, such as by software executing in a general-purpose computer, by firmware executed by a microprocessor, by dedicated hardware, and the like.

As described in patent no. 7,135,992, the process retrieves a group of at least 2 images for analysis. For example, the images can be provided by a visual sensor with multiple images, such as a binocular or trinocular camera, or by a visual sensor with a single imager, such as from a single camera. When images from a single camera are used, the process can select images that are appropriately spaced apart. In the illustrated embodiment, the robot is equipped with a single forward-looking camera and travels forward to take related images. Other configurations for the visual sensor are also possible. In other examples, the visual sensor can correspond to a generally upward-pointing camera, to a sideways-looking camera, or to positions between forward looking, upward, and/or sideways. Returning now to the illustrated embodiment with a single forward-looking camera, in one example, three images are selected at a separation distance of at least about 10 centimeters (cm) apart. It will be understood that an appropriate distance for the separation distance can vary in a broad range depending on the environment. For example, where the operating environment corresponds to a relatively expansive environment, such as to an outdoor environment, the appropriate distance for separation between images can be higher in order to gain perspective on the features. In one embodiment, the separation distance can be adaptively varied in response to an estimate of the proximity of obstacles that can obstruct the motion of the robot. In one embodiment, where the robot is equipped with a single forward-looking camera, the robot moves in an approximately straight line in the forward direction while taking the images. Although some turning can be tolerated while the robot is taking images, the turning should not be so excessive such that the features of the landmarks are no longer in the view of the camera.

Where the robot is equipped with a visual sensor with multiple imagers, such as a trinocular camera, certain steps can be skipped, and the spacing between the visual sensors can be retrieved from a stored parameter in memory.

When a single camera is used as the visual sensor, and the robot moves to take different images from different perspectives, the process retrieves the actual distances between images and checks the amount of movement. In one embodiment, these distances are determined by monitoring the dead reckoning data corresponding to the times at which the images were taken.

The process tests the distance traveled between images, termed "baseline." For example, the amount of baseline between images can be compared to a predetermined value. It will be understood that the predetermined value can vary in a very broad range. In an indoor environment, such as the interior of a home or apartment, an appropriate value can be about 10 centimeters for the predetermined value. Of course, the appropriate value can depend on the environment, and other appropriate values will be readily determined by one of ordinary skill in the art. When the movement of the robot is not sufficient between one or more of the images in the group, the process does not create a landmark. Otherwise, the process may create a landmark.

The process analyzes the selected images to identify 2-D features that are common to the images in the group. The number of features that are observable will vary according to the environment. The extraction of suitable features has been extensively described in the literature. SIFT features are one example of such 2-D features. See, for example, David G. Lowe, Local Feature View Clustering for 3D Object Recognition Proceedings of the IEEE Conference on Computer Vision and Pattern Recognition, Kauai, Hawaii (December 2001). It should be noted that other information used in the calculation of the features can include intrinsic camera calibration parameters and extrinsic camera parameters. Examples of intrinsic camera calibration parameters include optical center, distortion parameters, and focal length. Examples of extrinsic camera calibration parameters include a camera-rigid transformation between the camera reference frame and the local reference frame.

The process determines whether enough features have been identified that are common to the images in the group, e.g., the three images, for reliable identification of the landmark. When, for example, the process determines that fewer than a predetermined number of features are common to the images in the group, the process can determine that there are not enough features detected to reliably identify the landmark in the future. In this case, the process does not "create" a landmark. It will be understood that an appropriate value for the predetermined number of features can vary in a very broad range and can depend on the method used to identify visual features. In one embodiment, the predetermined number of features is higher for landmark creation than a predetermined value used to compare an image to an already stored landmark.

In one embodiment, where SIFT features are used, an example of a sample value for the predetermined number of features is about 10. Other suitable values will be readily determined by one of ordinary skill in the art. In one embodiment, the VSLAM system 600 can be configured to permit predetermined values to be user configurable.

When enough features common to the images in the group have been identified, the process computes 3-D local reference frame positions or displacements to the common features identified. In one embodiment, the 3-D local reference frame positions correspond to the approximate 3-D position $(x, y, z)$ of a feature relative to the visual sensor of the robot. Where multiple images are taken from a single visual sensor as the robot moves, the 3-D local reference frame positions can be relative to the position of the robot when the robot took one of the images in the group, such as the first image in the group. In one example, the computations for the 3-D positions are resolved by solving the structure and motion problem using the trifocal tensor method. It will be understood that the features can occupy a space larger than a point, such that the correspond 3-D positions can be relatively approximate.

The process determines whether there have been enough 3-D local reference frame positions for features resolved for the landmark to be reliably recognized. It will be understood that occasionally, the process may not find a solution to the 3-D local reference frame positions for a particular feature such that the number of 3-D features with corresponding displacement information can be different than the number of such initially-detected features. For example, the process can compare a count of the 3-D local reference frame positions resolved for features of a landmark to a predetermined number. In one embodiment, where SIFT features are used, the process determines that a landmark has a sufficient number of features with 3-D local reference frame positions resolved for relatively reliable recognition when there have been 10 or more such features resolved. Other appropriate values will be readily determined by one of ordinary skill in the art.

When the landmark has been determined to be reliably recognized, the process identifiably stores the features, the 3-D positions, and, optionally, the approximate 2-D image locations corresponding to the features for the image that is used as the reference. For example, the 3-D position and the 2-D image location for a feature can be stored in a record in a feature table. It will be understood that each landmark that is created should have a unique reference, such as a unique numbered identifier, and that each feature of a reference should also be identifiable, such as by a combination of the reference for the landmark, e.g., Landmark ID, and the reference for the feature, e.g., Feature ID.

The process provides an indication that a new landmark has been created to other processes, such as processes related to the SLAM portion of VSLAM. For example, the indication can be provided as a parameter or flag in a software call, a hardware or a software interrupt, and the like. The indication can also be accompanied by the landmark identifier for the newly created landmark.

In an optional embodiment, an example SLAM process receives an indication that a new landmark has been observed. The process computes the change in pose from a last update time for the SLAM system. Optionally, all the particles of a SLAM system are updated at the same time such that the last update time for a particular particle is the same as the last update time for the other particles. The change in pose may be computed by retrieving data provided by the dead reckoning sensors and/or interface. Optionally, the process retrieves the appropriate data from a data store, such as from a database including a dead reckoning data matrix. For example, a timestamp associated with the last update time for the particles and a timestamp associated with the recognition of the observed landmark can be used to identify the appropriate data to be retrieved from the dead reckoning data matrix. Optionally, the process computes a change in pose $[\Delta_1, \Delta_2, \Delta_3]^T$ from the dead reckoning data, the results of which will be used later to estimate or predict the pose of a robot in the global reference frame and/or update the landmark pose.

$$\Delta^{\text{odom}} = \begin{bmatrix} \Delta_1^{\text{odom}} \\ \Delta_2^{\text{odom}} \\ \Delta_3^{\text{odom}} \end{bmatrix} = \begin{bmatrix} \sqrt{(y_l - y_k)^2 + (x_l - x_k)^2} \\ \left[ \left( \arctan\left( \dfrac{y_l - y_k}{x_l - x_k} \right) - \theta_k + \pi \right) \bmod 2\pi \right] - \pi \\ [(\theta_l - \theta_k + \pi) \bmod 2\pi] - \pi \end{bmatrix}$$

**Equation 1**

In **Equation 1,** the change in pose from a first dead reckoning pose at time $k(x_k, y_k, \theta_k)$ to a second dead reckoning pose at time $l(x_l, y_l, \theta_l)$ is computed. Optionally, the change in pose is computed by a function call, such as a call to a "DeltaPose" subroutine. A variable $\Delta_1^{\text{odom}}$ corresponds to the Euclidean distance between $(x_k, y_k)$ and $(x_l, y_l)$. A variable $\Delta_2^{\text{odom}}$ corresponds to the bearing from the robot at time $k$ to the robot at time $l$. A variable $\Delta_3^{\text{odom}}$ represents the change in heading from the robot at time $k$ to the robot at time $l$. The "mod" denotes the arithmetic modulus operator.

Where multiple particles are used to track multiple hypothesis, a loop updates each particle that is maintained. The process retrieves the landmark identifier for the newly defined landmark. Optionally, the same landmark identifier is used to identify a landmark in a SLAM process as the identifier for the landmark in a visual localization process. Of course, a different landmark identifier can also be generated and cross-referenced. It should also be noted that the SLAM process does not need to store graphical information, such as 3-D features, of the landmark. Rather, the SLAM process can optionally operate by identification of which landmark was encountered, such as the Landmark ID, such that a database record identifier can be used to identify the landmarks within SLAM. The process adds the new landmark pose to the database. Optionally, the initial estimate of the new landmark pose is the estimated pose of the robot corresponding to when the landmark was observed that is stored in the database and not the estimated position in space of the physical landmark itself. To add the new landmark pose to the database, the process estimates the current pose of the robot for the particle corresponding to the particular iteration of the loop. Optionally, the current pose is estimated by combining the change in pose from the dead reckoning data as calculated in the state with the previous pose of the robot for the particle as retrieved from the last time that the particle was updated. **Equation 2** expresses one way to combine the change in pose $[\Delta_1^{\text{odom}}, \Delta_2^{\text{odom}}, \Delta_3^{\text{odom}}]^T$ with a previous pose $(x_k, y_k, \theta_k)$ to generate a new pose $(x_l, y_l, \theta_l)$, which is used as the new landmark pose. It will be understood that the subscripts of $k$ and $l$ represent different variables than the same subscripts of $k$ and $l$ as used below.

$$\begin{bmatrix} x_l \\ y_l \\ \theta_l \end{bmatrix} = \begin{bmatrix} x_k + \Delta_1^{\text{odom}} \cos(\theta_k + \Delta_2^{\text{odom}}) \\ y_k + \Delta_1^{\text{odom}} \sin(\theta_k + \Delta_2^{\text{odom}}) \\ [(\theta_k + \Delta_3^{\text{odom}} + \pi) \bmod 2\pi] - \pi \end{bmatrix}$$

**Equation 2**

In one embodiment, the new robot pose $(x_l, y_l, \theta_l)$ is computed by a function call, such as a call to a "PredictPose" subroutine. The process initializes the landmark covariance matrix $C_m^k$ associated with the particle corresponding to the iteration of the loop, where m is a particle loop variable and where $k$ is a landmark loop variable. In one embodiment, the landmark covariance matrix $C_m^k$ is initialized to a diagonal matrix 3x3 matrix. In one embodiment, the landmark covariance matrix $C_m^k$ is initialized to a diagonal matrix of diag(81 cm$^2$, 81 cm$^2$, 0.076 rad$^2$). Other suitable initialization values for the landmark covariance matrix $C_m^k$ will be readily determined by one of ordinary skill in the art. The values for the landmark covariance matrix $C_m^k$ can be stored in a record in a map table. It will be understood that appropriate initialization values can vary in a very broad range and can depend on a variety of factors, including camera specification, dead reckoning equipment precision, and the like. The loop may then end. The process returns to the beginning of the loop when there are remaining particles to be updated. Otherwise, the process ends.

In the preferred embodiment, landmarks are visually identified using visual features from the image data are extracted and matched using a Scale Invariant Feature Transform (SIFT), Speeded Up Robust Features (SURF), Gradient Location and Orientation Histogram (GLOH), Binary Robust Independent Elementary Features (BRIEF), or other type of visual feature known to those skilled in the art. The visual landmarks - along with estimates of the robot position and orientation (pose) of the robot when the image was taken - are stored in the landmark database 142.

The processor 130 includes a parameter mapping module 136 which is configured to generate a plurality of sub-maps or grids comprising local parameters and build global parameter maps based on those grids. In particular, the parameter mapping module 136 builds grids that depict the properties of the environment in proximity to associated anchor nodes, i.e, reference points fixed in their respective local reference frames. Estimates of the locations of the anchor nodes within the global reference frame are continually updated as the SLAM module 134 refines the localization map characterizing the environment. In the preferred embodiment, the parameters being mapped by the parameter mapping module 136 include obstacles and clear spaces through which the robot system is free to navigate, as is explained in more detail below. Each of the anchor nodes is stored in node database 144 and the associated grid stored in the grid database 146. In the preferred embodiment, the parameter mapping module includes an uncertainty tracking module 138 for measuring the uncertainty associated with the anchor nodes' localization estimate which is stored together with the anchor nodes' coordinates and heading in the global reference frame.

The processor 130 in the preferred embodiment further includes a navigation module 140 configured to generate signals that control the movement of the robot. For example, the navigation module can provide control signals to instruct the robot to move forward, to stop, to move backward, to tum, to rotate about a vertical axis. If the mobile robot system is an autonomous or semi-autonomous robot, the navigation module 140 can also perform path planning using path planning module 141 to efficiently guide the robot system to a desired destination and/or to achieve a desired goal. In accordance with the preferred embodiment, path planning is based on a parameter map that is generated from a plurality of parameter grids using current estimates of the poses of the anchors nodes corresponding to those grids.

The robot system 100 further includes a drive mechanism 150 for moving the robot around its environment, which may be indoors, outdoors, or a combination thereof. In the preferred embodiment, the drive mechanism includes two or more drive wheels 152 powered by a motor 154 and battery pack 156, for example. In addition to, or instead of the drive wheels, the robot system may also incorporate other forms of locomotion including tracks, rollers, propellers, legs, and the like, to move around. The drive mechanism 150 may further include one or more optical wheel encoders 158, for example, for measuring the wheel rotation and estimating the distance traveled by the robot system. In addition, the difference in the rotation of opposing wheels can indicate changes in heading.

With wheel encoders 158 or other type of dead reckoning, the robot system can compute course and distance traveled from a previous position and orientation (pose) and use this information to estimate a current pose. While relatively accurate over relatively short distances, dead reckoning sensing is prone to drift over time. Other forms of dead reckoning can include a pedometer (for walking robots), measurements from an inertial measurement unit, optical sensors such as those used in optical mouse devices, and the like.

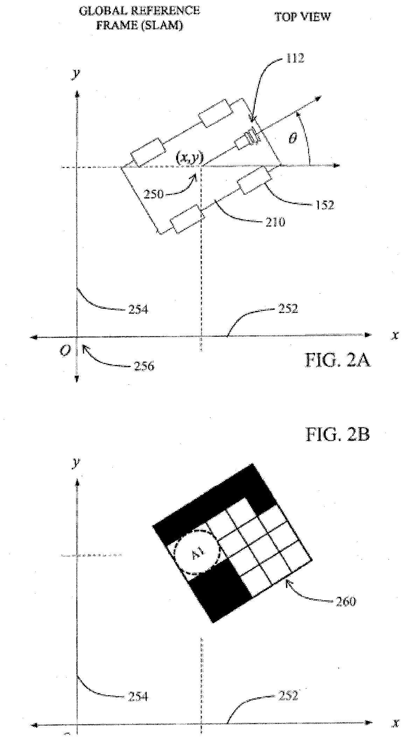

In the preferred embodiment, the robot system 210 tracks its current location, path, or combination thereof with respect to a global reference frame represented by Cartesian (x-y) coordinates 250, as shown in FIG. 2. It will be understood that other coordinate systems, such as polar coordinates, can also be used. With respect to FIG. 2, a horizontal axis 252 corresponds to the x-axis and a vertical axis 254 corresponds to the y-axis. The origin 256 of the coordinate system may coincide with the robot's starting position, position or a prior anchor node, or other arbitrary location. The pose, including position and orientation, of the robotic system may be recorded in terms of the Cartesian coordinates and angle theta, $\theta$.

By contrast, a grid in the preferred embodiment includes a map of local parameter data located relative to an anchor node in a local reference frame. As shown in FIG. 2B, properties of the environment in proximity to the anchor node are mapped to the grid 260 relative to the position of the anchor node A1. The grid 260 is therefore a local map describing the environment in the region around the anchor node. In the preferred embodiment, each grid includes a two dimensional Cartesian representation depicting the locations of obstacles (black cells) detect by the bump sensor 118 and open spaces (white cells) traversed by the robot (not to scale). In the preferred embodiment, an axis of the grid's Cartesian coordinate system coincides with robot's orientation anchor node, $\theta$, which is generally different than the orientation of the x-axis 252 and y-axis 254 in the global reference frame. With respect to the global reference frame, an anchor node is typically a point along the path of the robot while navigating through the environment.

Although the grids in the preferred embodiment are shown as two dimensional (2D) Cartesian sub-maps, the grids may effectively record local parameter data using other reference systems including spherical and cylindrical coordinates systems for example. The parameter data is represented with pixels in a Cartesian coordinate system in the preferred embodiment. In alternative embodiments, grids may represent local parameter data as (1) pixels in a cylindrical coordinate system, (2) polygons with an arbitrary number of sides, or (3) other arbitrary shape, for example.

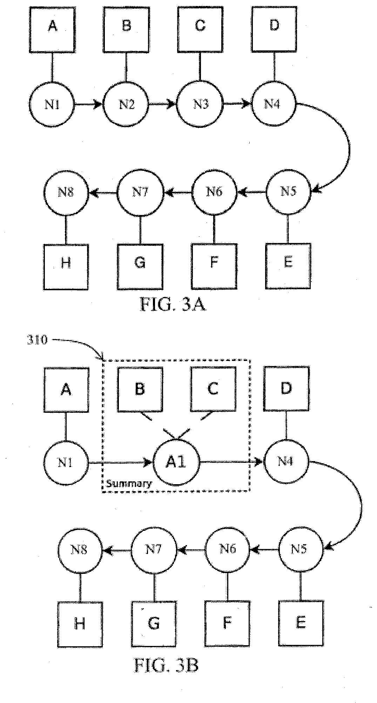

Referring to FIG. 3A, the robotic system 100 in the exemplary embodiment is configured to traverse a path through an environment. The path may be predetermined by the navigation module 140, determined ad hoc, or manually determined by a human driver or navigator, for example. While traversing the path, the localization module acquires image data with which it generates new landmarks and recognizes known landmarks for purposes of mapping the environment and locating the robotic system within the environment. The landmark information, in combination with the odometry information, enables the robotic system to make accurate estimates of the robot's location in the environment.

The robotic system generates a map of one or more parameters of interest in parallel with the location determination. In particular, the parameter mapping module senses properties of the environment and generates a parameter map depicting those properties. Referring to FIG. 3A, the mapping process begins by taking measurements of these properties and various locations or poses in the environment. The robot poses are represented as circles N1 - N8 and the parameters observed at each of the respective poses is poses are represented as squares A - H. As one skilled in the art will appreciate, the parameter data would generally grow linearly in time as the robot continues to collect measurements. To limit the parameter to a manageable level, the robotic system in the present invention generates spatial summaries that effectively summarize parameter data is specific geographic locations. Referring to FIG. 3B, the robot system is configured to combine parameter readings for different poses if the relative uncertainty between those poses is small. For example, if Pose N2 and Pose N3 in FIG. 3A have a relative pose transformation with low uncertainty, Sensor Data B and C can be combined into one summary corresponding to Pose AI shown in FIG. 3B. The pose associated with the summary of Sensor Data Band C is tied to one root poses referred to herein as an anchor node. The pose selected to be the anchor node may be the pose associated with Pose N2, Pose N3, or a new pose created from the combination of the Pose 2 and 3.

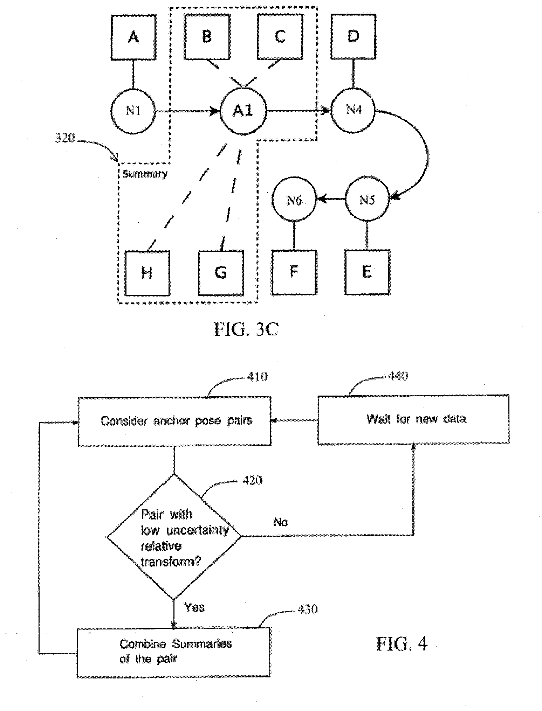

Successive poses, like Pose N2 and Pose N3, generally have a relatively low relative uncertainty (due to the accuracy of the dead reckoning sensors) and may, therefore be combined into a single summary in many cases. As the localization information generated by the location module improves over time, the uncertainty of the relative pose between anchor nodes of two summaries will decrease. When the relative pose between two anchor nodes becomes sufficiently certain - the relative uncertainty drops below a threshold - the summaries associated with multiple nodes may be combined into a single summary that is then associated with a single anchor node. As shown in FIG. 3C, the summary of Sensor Data B and C is combined with the summary of Sensor Data H and G to create a single new summary associated with the anchor node A1. Since the new summary effectively summarizes the sensor data in the region of Anchor A1, the summary including Sensor Data B, C, G, and H is referred to herein as a spatial summary. As illustrated in FIG. 4, multiple pairs of anchor node poses are compared. In the extreme, the pose for each anchor is compared to the pose for every other anchor node. If the uncertainty associated with the relative pose between the anchor nodes is below a threshold, the decision block is answered in the affirmative and the summaries (comprised of sensor data) for the anchor nodes are combined into a single summary associated with a single anchor node. If, however, the uncertainty exceeds the threshold, the pair of anchor nodes is not combined and new sensor data added to the grid associated with the current node. The "uncertainty" of relative poses between anchor nodes is, in the preferred embodiment, the sum of the diagonal elements of the covariance matrix of the relative pose estimate. In other embodiments, the method of measuring relative uncertainty includes generating a Mahalanobis distance, or like uncertainty estimating metric.

As described above, the parameter data from a plurality of grids may be merged in a single summary associated with a single anchor node based on the relative pose uncertainty. Other criteria may also be used when determining whether to combine grids. These criteria may include, but are not limited to: (a) whether the summary reduces the memory requirements, i.e., whether the number of anchor nodes and grids data is reduced; (b) whether the summary improves performance, i.e., whether the summary reduces the time needed to compute a complete parameter map; (c) whether the map quality improves, i.e., whether merging or eliminating relatively "old" and outdated maps while retaining relatively "newer" maps improves the accuracy of the parameter map; or (d) any combination thereof.

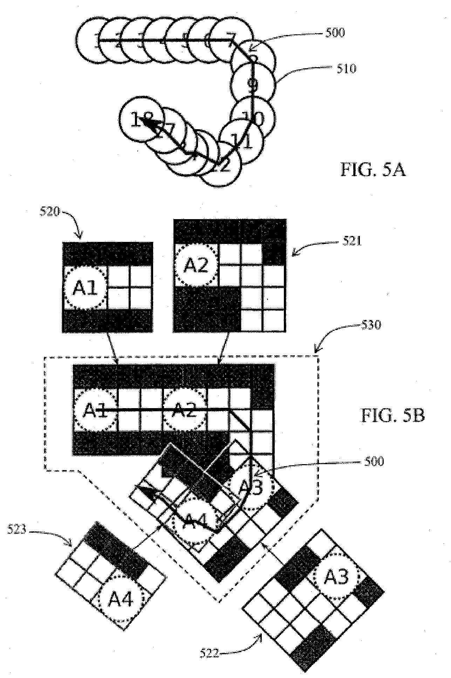

Illustrated in FIG. 5A is a robot path 500 and a plurality of corresponding nodes 510, and illustrated in FIG. 5B are the anchor nodes and associated grids that summarize the sensor data for the nodes 510 shown in FIG. 5A. Referring to FIG. 5A, the robot system collects sensor data while traversing a trajectory 500 through the environment. The sensor data, including obstacles, for example are associated with the pose of the robot at the time the sensor data was taken. Due to the volume of this data, however, the robotic system summarizes this data in the manner illustrated in FIG. 5B. Anchor nodes AI - A4 are shown in FIG. 5B as circles and the grids 520-523 shown as rectangles. In the preferred embodiment, the sensor data includes bump sensor data that indicates the presence of obstacles. Each grid, thus, depicts the locations of areas that are clear to traverse (shown as white cells) as well as obstacles or occupied areas (shown as black cells) in proximity to their respective anchor node.

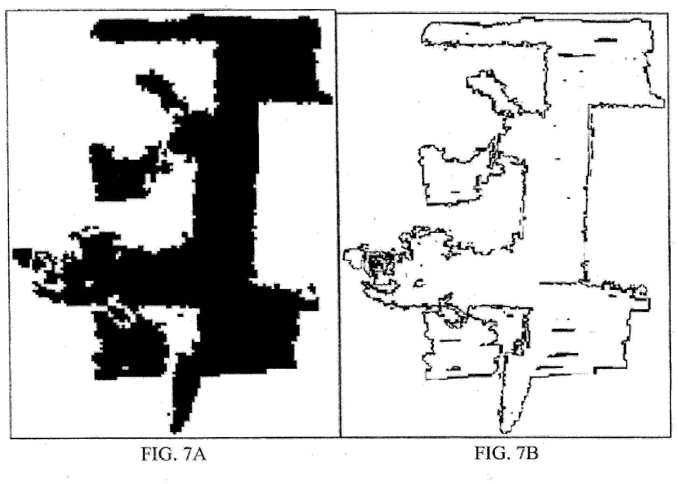

In accordance with the preferred embodiment, the parameter mapping module 136 identifies nodes having a relative pose uncertainty below a threshold, combines the sensor data for these poses into a single grid, and associates the grid with a single anchor node. The parameter data from grids 520-523, for example, can be combined by overlaying the respective grids 520-523 as shown by the superposition 530 of grids. As one skilled in the art will appreciate, the plurality of grids may overlap in physical extent, possess different orientations in their respective local reference frames, and be of different sizes. Thereafter, data from the superposition 530 of grids may be combined into a single spatial summary associated with a new anchor node, for example. In the alternative, the superposition of spatial summaries may be used to build a global parameter map used to, for example, plan a new path for the robot through the environment. Exemplary parameter maps are shown and discussed in reference to FIGS. 7A and 7B.

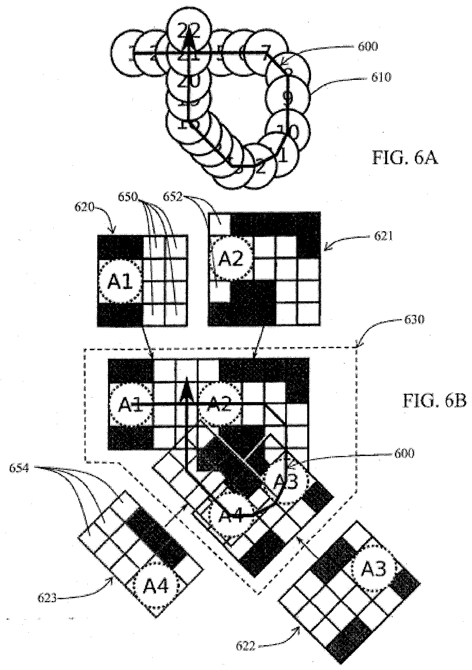

Like FIG. 5A-5B, FIG. 6A-6B illustrates a robot path with corresponding nodes and anchor nodes with associated grids. As shown in FIG. 6A, the trajectory of the mobile robot has circled back on itself. In doing so, the robot traverses an area that it previously traversed earlier in its trajectory. As illustrated in FIG. 6B, by looping back, the robot is able to collect additional sensor data that can be used to update one or more previous grids and even modify sensor data used to populate the old version of the same grid. If the current pose of the robotic system is known with sufficient certainty relative to a prior pose, the anchor node associated with the prior pose is retrieved and the new sensor mapped to the grid associated with the prior anchor node.

For example, cells 520, 521 in the grid associated with anchor node AI and A2 show occupied areas (or unsearched areas) in FIG. 5B. In FIG. 6B, the same cells 650, 652 in corresponding grids 620, 621 for anchor A1 and A2 were updated to show those cells as "clear areas" after the robot traverses the same area a second time. Similarly, new parameter data from sensors 110 is used to introduce new cells 654 to grid 523 in FIG. 5B to create the updated and expanded grid 623 in FIG. 6B. In both examples above, new sensor data collected while looping back is added to a prior grid because the uncertainty associated with the initial pose and later pose was below the acceptable threshold. In doing so, the mapping module 136 effectively updates existing grids with new information without creating new anchor nodes or grids. The present invention, therefore, effectively enables the parameter map to be continually updated with new sensor data without the storage requirements for the sensor data growing linearly with time.

At any point in time, the grids may be combined to generate a complete parameter map of the entire environment or a portion of the environment for purposes of path planning, for example. A representative parameter map is shown in FIGS. 7A and 7B. In the preferred embodiment, the plurality of grids depicting the presences of obstacles are combined to form an occupancy map of "clear" areas (i.e., open areas free of obstacles) in FIG. 7A and an occupancy map of "obstacles" (e.g., walls that bound the open areas) in FIG. 7B. Grids - also known as summaries when merged - may be combined by overlaying the grids at their respective locations in the global reference frame. The location of each individual grid is defined by the most current estimate of the position and orientation of the respective anchor point. The position and pose of each anchor node, in turn, is regularly updated within the global reference frame as new SLAM data is received and the uncertainties associated with the pose estimates is reduced. The occupancy map shown in FIGS. 7A and 7B are rendered in two dimensions (2D). In other embodiments, the occupancy map or other parameter map may be rendered in three dimensions (3D) if the sensor data and corresponding grids include elevational information, for example.

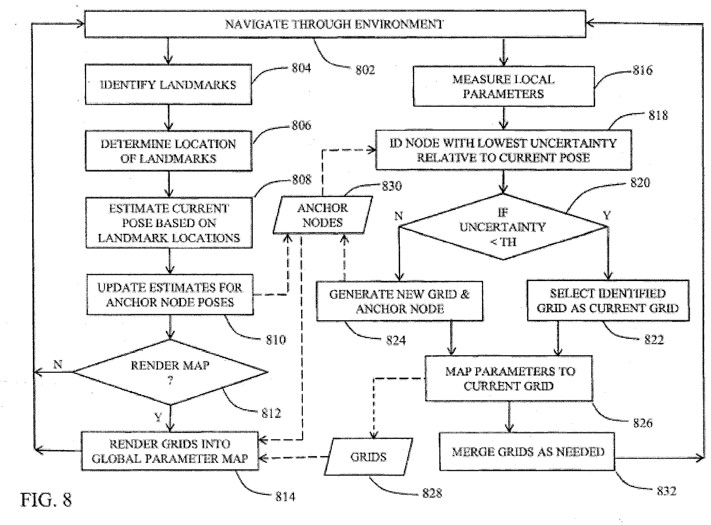

Illustrated in FIG. 8 is a flow chart showing the method of localization and parameter mapping, in accordance with the preferred embodiment of the present invention. In the preferred embodiment, the location and parameter mapping occur concurrently or substantially concurrently while the robotic system navigates 802 through the environment. With respect to localization, the robotic system repeatedly acquires images of the environment with which it identifies 804 landmarks. As the robot traverses the environment, it generally acquires multiple images or other measurements of each landmark which enables it to determine 806 the locations of the landmarks in two dimension (2D) or three dimensional (3D) space. As the map of landmarks is constructed and refined, the robot is able to make increasingly accurate estimates of its current pose 808 as well as the pose associated with each of the anchor nodes 810. The localization system may update the estimated locations of the anchor nodes to generate an occupancy map, for example, in the global reference frame. If an occupancy map is required for path planning for example, the decision block 812 is answered in the affirmative and the updated estimates of the locations of the anchor nodes used to superimpose the associated grids and render 814 the grids into a cohesive map as shown in FIGS. 7A and 7B.

While the robotic system navigates 802 through the environment, it measures 816 local parameters using onboard sensors including the bump sensor. Using the estimate of the current pose, the parameter mapping module searches for and identifies 818 an existing anchor node having the lowest relative pose uncertainty with respect to the current node. The identified node may be the preceding node in the robot path, or a prior node that is closest in distance to the current node. If the relative pose uncertainty between the current node and a prior node is below a predetermined threshold, the decision block 820 is answered in the affirmative. In this case, the grid associated with the prior anchor node is selected 822 to be the current grid and incoming sensor data mapped 826 to this current grid. The uncertainty is determined from the covariance matrix describing the positional uncertainties associated with the localization using the visual SLAM module and odometry sensors, for example. If, however, the uncertainty exceeds the predetermined threshold, the decision block 820 is answered in the negative. In this case, a new anchor node is generated 824 and the incoming sensor data mapped 826 to a new grid associated with the new anchor node. The process of mapping 826 incoming parameter data continues while the uncertainty remains sufficiently low. Over relatively short distances, dead reckoning measurements, such as those obtained from odometry readings, can be quite accurate. As such, the uncertainty remains low and incoming sensor data generally used to populate the current parameter. New nodes tend to be generated after the robot has traveled some distance in a previously unexplored area. New anchor nodes 830 are recorded in the node database 144 and new and updated grids 828 recorded in the grid database 146.

On occasion, the parameter data from a plurality of local grids is merged 832 into one or more spatial summaries. As discussed in detail in FIG. 4, grids may be combined into spatial summaries if the uncertainty associated with the relative pose between the respective anchor nodes is below a threshold. The mapping module 136 periodically attempts to generate spatial summaries in response to any of a number of events or conditions including: (1) elapse time; (2) space covered by the mobile robot or area mapped by the mobile robot; (3) grid memory limitation; (4) total number of grids or anchor nodes; or combination thereof. Moreover, the process of rendering a plurality of grids into a global parameter map may be repeated as necessary based on the conditions stated above.

The robotic system of the present invention can be implemented in systems include hardware, software, firmware, or a combination thereof. Hardware can include one or more general purpose computers, microprocessors, application specific integrated circuits (ASICs), field programmable gate arrays (FPGAs), and the like, as well as combinations thereof linked by networking systems, for example. Software may include computer-readable instructions for execution on various processors, computers, servers, or like circuit board or chips. The computer-readable instructions may be affixed in volatile or non-volatile memory including memory chips, hard drives, on compact discs, for example.

The present invention may also be implement in a plurality of platforms including a distributed platform including two or more network-enabled robots that cooperate with a remote central processing unit (CPU), for example, to collect landmark information from a relatively large environment. The CPU may include a personal computer, mobile phone, tablet computer, server, or like device that perform the computation of the processor 130. In some embodiments, the present invention is implemented with a fleet of robots that periodically exchange positioning information and parameter maps (either rendered a single map or as a collection of individual sub-maps) while traversing the environment so that each robot has information on all the parameters explored by other robots.

Although the description above contains many specifications, these should not be construed as limiting the scope of the invention but as merely providing illustrations of some of the presently preferred embodiments of this invention.

**Claims**

1. A method of mapping parameters acquired by a robotic system( 100) which uses a SLAM *(Simultaneous Location and Mapping)* module (134) in an environment, the method comprising:

    driving (802) the robotic system (100 ) in the environment;
    measuring a first set of parameters that characterize the environment;
    estimating a first pose of the robotic system;
    defining a first anchor node associated to an estimate of the first pose, wherein the first anchor node is one of a plurality of anchor nodes;
    generating a first grid associated with the first anchor node, wherein the first grid comprises a map of the first set of measured parameters, wherein the first set of measured parameters are mapped relative to the first pose;
    after driving a determined period of time, determining an estimate of a second pose of the robotic system;
    determining (820) an uncertainty between the estimate of the second pose and the estimate of the first pose; and
    if the uncertainty is greater than a first threshold, then:

        a) defining (824) second anchor node associated to the estimate of the second pose of the robotic system (100); and
        b) generating (824) a second grid associated with the second anchor node, wherein the second grid comprises a map of a second set of measured parameters mapped relative to the second pose.

2. The method of claim 1, further comprising merging grids (832 ) associated with the plurality of anchor nodes, wherein the merging comprises:

    determining an uncertainty between the estimate of each pose of the plurality of anchor nodes and every other pose of the plurality of anchor nodes;
    determining an uncertainty between the estimates of two of the plurality of anchor nodes; and
    if the uncertainty between estimates of poses of two anchor nodes is below a second threshold, then combining the grids associated with these two anchor nodes into a single grid associated with a single anchor node.

**3.** The method of claim 2, wherein the uncertainty between estimates of poses is based on a covariance matrix of relative pose estimates.

**4.** The method of any one of claims 1 to 3, further comprising:

identifying (804) a plurality of landmarks in the environment; and
determining locations (806) of the plurality of landmarks.

**5.** The method of claim 4, wherein estimating a current pose comprises:

the step of identifying (804) the plurality of landmarks in the environment; the step of determining the locations (806) of the plurality of landmarks with respect to a global reference frame associated with the environment; determining (808) the current pose of the robotic system (100) with respect to a global reference frame based on the locations of the plurality of landmarks.

**6.** The method of claim 5, further comprising:

updating 810 the poses associated with the plurality of anchor nodes based on the locations of the plurality of landmarks; and
generating an occupancy map indicating presence or absence of obstacles from a plurality of grids, wherein the locations of the grids is based on the locations of the respective anchor nodes.

**7.** The method of any one of claims 1 to 6, wherein the first set of parameters being mapped comprises occupancy data, wherein the occupancy data indicates locations of obstacles in the environment.

**8.** The method of any one of claims 1 to 7, wherein the first set of parameters being mapped indicates locations of dirt in the environment.

**9.** The method of claim 1, further comprising:
if the uncertainty between two of the plurality of pose estimates is below a second threshold, then combining the grids associated with the two pose estimates into a spatial summary grid associated with a pose estimate.

**10.** The method of claim 9, further comprising:
rendering (814) a plurality of the spatial summary grids into a global parameter map.

**11.** The method of claim 10, wherein at least one of the spatial summary grids comprises a map of parameter data in proximity to a location given by the associated pose estimate.

**12.** The method of claim 10 or 11, wherein at least one of the spatial summary grids comprises a Cartesian coordinate system different than the global parameter map.

**13.** The method of any one of claims 9 to 12, wherein the spatial summary grid consists of a single grid, wherein the single grid comprises parameter data from at least two grids associated with different pose estimates.

**14.** The method of claim 13, wherein parameter data is represented in at least one spatial summary grid using one or more polygons.

**Patentansprüche**

**1.** Verfahren zum Kartieren von Parametern, die von einem Robotersystem (100), das ein SLAM-(Simultaneous Location and Mapping)-Modul (134) verwendet, in einer Umgebung erlangt werden, wobei das Verfahren umfasst:

das Bewegen (802) des Robotersystems (100) in der Umgebung;
das Messen eines ersten Satzes von Parametern, die die Umgebung charakterisieren;
das Schätzen einer ersten Pose des Robotersystems;
das Definieren eines ersten Ankerknotens, der einer Schätzung der ersten Pose zugeordnet ist, wobei der erste Ankerknoten einer von einer Mehrzahl von Ankerknoten ist;
das Erzeugen eines ersten Gitters, das dem ersten Ankerknoten zugeordnet ist, wobei das erste Gitter eine Karte des ersten Satzes gemessener Parameter aufweist, wobei der erste Satz gemessener Parameter bezüglich der ersten Pose kartiert wird;
nach dem Bewegen für eine bestimmte Zeitdauer das Bestimmen einer Schätzung einer zweiten Pose des Robotersystems;
das Bestimmen (820) einer Unsicherheit zwischen der Schätzung der zweiten Pose und
der Schätzung der ersten Pose; und
falls die Unsicherheit größer als ein erster Schwellenwert ist, dann:

a) das Definieren (824) eines zweiten Ankerknotens, der der Schätzung der zweiten Pose des Robotersystems (100) zugeordnet ist; und
b) das Erzeugen (824) eines zweiten Gitters, das dem zweiten Ankerknoten zugeordnet ist, wobei das zweite Gitter eine Karte eines zweiten Satzes gemessener Parameter aufweist, der bezüglich der zweiten Pose kartiert wird.

2. Verfahren nach Anspruch 1, ferner umfassend das Zusammenlegen (832) von Gittern, die der Mehrzahl von Ankerknoten zugeordnet sind, wobei das Zusammenlegen umfasst:

das Bestimmen einer Unsicherheit zwischen der Schätzung jeder Pose der Mehrzahl von Ankerknoten und jeder anderen Pose der Mehrzahl von Ankerknoten;
das Bestimmen einer Unsicherheit zwischen den Schätzungen von zwei der Mehrzahl von Ankerknoten; und
falls die Unsicherheit zwischen Schätzungen von Posen von zwei Ankerknoten unter einem zweiten Schwellenwert liegt, dann das Kombinieren der Gitter, die diesen zwei Ankerknoten zugeordnet sind, zu einem einzelnen Gitter, das einem einzelnen Ankerknoten zugeordnet ist.

3. Verfahren nach Anspruch 2, wobei die Unsicherheit zwischen Schätzungen von Posen auf einer Kovarianzmatrix relativer Posenschätzungen basiert.

4. Verfahren nach einem der Ansprüche 1 bis 3, ferner umfassend:

das Identifizieren (804) einer Mehrzahl von Landmarken in der Umgebung; und
das Bestimmen (806) von Positionen der Mehrzahl von Landmarken.

5. Verfahren nach Anspruch 4, wobei das Schätzen einer aktuellen Pose umfasst:

den Schritt des Identifizierens (804) der Mehrzahl von Landmarken in der Umgebung; den
Schritt des Bestimmens (806) der Positionen der Mehrzahl von Landmarken in Bezug auf einen globalen Bezugsrahmen, der der Umgebung zugeordnet ist;
das Bestimmen (808) der aktuellen Pose des Robotersystems (100) in Bezug auf einen globalen Bezugsrahmen auf Grundlage der Positionen der Mehrzahl von Landmarken.

6. Verfahren nach Anspruch 5, das ferner umfasst:

das Aktualisieren 810 der Posen, die der Mehrzahl von Ankerknoten zugeordnet sind, auf Grundlage der Positionen der Mehrzahl von Landmarken; und
das Erzeugen einer Belegungskarte, die das Vorhandensein oder Nichtvorhandensein von Hindernissen angibt, aus einer Mehrzahl von Gittern, wobei die Positionen der Gitter auf den Positionen der entsprechenden Ankerknoten basieren.

7. Verfahren nach einem der Ansprüche 1 bis 6, wobei der erste Satz von Parametern, die kartiert werden, Belegungsdaten aufweist, wobei die Belegungsdaten Positionen von Hindernissen in der Umgebung angeben.

8. Verfahren nach einem der Ansprüche 1 bis 7, wobei der erste Satz von Parametern, die kartiert werden, Positionen von Schmutz in der Umgebung angibt.

9. Verfahren nach Anspruch 1, das ferner umfasst:
falls die Unsicherheit zwischen zwei der Mehrzahl von Posenschätzungen unter einem zweiten Schwellenwert liegt, dann das Kombinieren der Gitter, die den zwei Posenschätzungen zugeordnet sind, zu einem räumlichen Zusammenfassungsgitter, das einer Posenschätzung zugeordnet ist.

10. Verfahren nach Anspruch 9, das ferner umfasst:
das Rendern (814) einer Mehrzahl der räumlichen Zusammenfassungsgitter zu einer globalen Parameterkarte.

11. Verfahren nach Anspruch 10, wobei mindestens eines der räumlichen Zusammenfassungsgitter eine Karte von Parameterdaten in der Nähe einer Position, die durch die zugeordnete Posenschätzung gegeben ist, aufweist.

12. Verfahren nach Anspruch 10 oder 11, wobei mindestens eines der räumlichen Zusammenfassungsgitter ein kartesisches Koordinatensystem aufweist, das sich von der globalen Parameterkarte unterscheidet.

13. Verfahren nach einem der Ansprüche 9 bis 12, wobei das räumliche Zusammenfassungsgitter aus einem einzelnen Gitter besteht, wobei das einzelne Gitter Parameterdaten aus mindestens zwei Gittern aufweist, die unterschiedlichen Posenschätzungen zugeordnet sind.

14. Verfahren nach Anspruch 13, wobei Parameterdaten in mindestens einem räumlichen Zusammenfassungsgitter unter Verwendung eines oder mehrerer Polygone dargestellt sind.

## Revendications

1. Procédé de mise en correspondance de paramètres acquis par un système robotique (100) utilisant un module SLAM *(Simultaneous Location and Mapping = Localisation et mise en correspondance simultanées)* (134) dans un certain environnement, le procédé comprenant les étapes consistant à :

   entraîner (802) le système robotique (100) dans l'environnement ;
   mesurer un premier ensemble de paramètres qui caractérisent l'environnement ;
   estimer une première pose du système robotique ;
   définir un premier nœud d'ancrage associé à une estimation de la première pose, dans lequel le premier nœud d'ancrage est l'un d'une pluralité de nœuds d'ancrage ;
   générer une première grille associée au premier nœud d'ancrage, dans lequel la première grille comprend une carte du premier ensemble de paramètres mesurés, dans lequel le premier ensemble de paramètres mesurés est mis en correspondance par rapport à la première pose ;
   après entraînement pendant une période de temps déterminée, déterminer une estimation d'une seconde pose du système robotique ;
   déterminer (820) une incertitude entre l'estimation de la seconde pose et l'estimation de la première pose ; et
   si l'incertitude est supérieure à un premier seuil, alors :

   a) définir (824) un second nœud d'ancrage associé à l'estimation de la seconde pose du système robotique (100) ; et
   b) générer (824) une seconde grille associée au second nœud d'ancrage, dans lequel la seconde grille comprend une carte d'un second ensemble de paramètres mesurés mis en correspondance par rapport à la seconde pose.

2. Procédé selon la revendication 1, comprenant en outre l'étape consistant à fusionner les grilles (832) associées à la pluralité de nœuds d'ancrage, dans lequel la fusion comprend les étapes consistant à :

   déterminer une incertitude entre l'estimation de chaque pose de la pluralité de nœuds d'ancrage et toute autre pose de la pluralité de nœuds d'ancrage ;
   déterminer une incertitude entre les estimations relatives à deux parmi la pluralité de nœuds d'ancrage ; et
   si l'incertitude entre les estimations de poses relatives à deux nœuds d'ancrage est inférieure à un second seuil, combiner alors les grilles associées à ces deux nœuds d'ancrage en une seule grille associée à un seul nœud d'ancrage.

3. Procédé selon la revendication 2, dans lequel l'incertitude entre les estimations des poses est basée sur une matrice de covariance d'estimations relatives des poses.

**4.** Procédé selon l'une quelconque des revendications 1 à 3, comprenant en outre les étapes consistant à :

> identifier (804) une pluralité de points de repère dans l'environnement ; et
> déterminer les emplacements (806) de la pluralité de points de repère.

**5.** Procédé selon la revendication 4, dans lequel l'estimation d'une pose actuelle comprend :

> l'étape d'identification (804) de la pluralité des points de repère dans l'environnement ;
> l'étape consistant à déterminer les emplacements (806) de la pluralité des points de repère par rapport à un cadre de référence global associé à l'environnement ;
> la détermination (808) de la pose actuelle du système robotique (100) par rapport à un cadre de référence global en fonction des emplacements de la pluralité des points de repère.

**6.** Procédé selon la revendication 5, comprenant en outre les étapes consistant à :

> mettre à jour (810) les poses associées à la pluralité de nœuds d'ancrage sur la base des emplacements de la pluralité des points de repère ; et
> générer une carte d'occupation indiquant la présence ou l'absence d'obstacles dans une pluralité de grilles, dans lequel les emplacements des grilles sont basés sur les emplacements des nœuds d'ancrage respectifs.

**7.** Procédé selon l'une quelconque des revendications 1 à 6, dans lequel le premier ensemble de paramètres mis en correspondance comprend des données d'occupation, dans lequel les données d'occupation indiquent les emplacements des obstacles dans l'environnement.

**8.** Procédé selon l'une quelconque des revendications 1 à 7, dans lequel le premier ensemble de paramètres mis en correspondance indique des emplacements de saleté dans l'environnement.

**9.** Procédé selon la revendication 1, comprenant en outre l'étape consistant à :
si l'incertitude entre deux de la pluralité des estimations de pose est inférieure à un second seuil, combiner alors les grilles associées aux deux estimations de pose en une grille de résumé spatial associée à une estimation de pose.

**10.** Procédé selon la revendication 9, comprenant en outre l'étape consistant à :
représenter (814) une pluralité de grilles de résumé spatial en une carte de paramètres globale.

**11.** Procédé selon la revendication 10, dans lequel au moins une des grilles de résumé spatial comprend une carte de données de paramètres à proximité d'un emplacement donné par l'estimation de pose associée.

**12.** Procédé selon la revendication 10 ou 11, dans lequel au moins une des grilles de résumé spatial comprend un système de coordonnées cartésiennes différent de la carte de paramètres globale.

**13.** Procédé selon l'une quelconque des revendications 9 à 12, dans lequel la grille de résumé spatial consiste en une grille unique, dans lequel la grille unique comprend des données de paramètres d'au moins deux grilles associées à des estimations de pose différentes.

**14.** Procédé selon la revendication 13, dans lequel les données des paramètres sont représentées dans au moins une grille de résumé spatial utilisant un ou plusieurs polygones.

FIG. 1

GLOBAL REFERENCE
FRAME (SLAM)

TOP VIEW

FIG. 2A

FIG. 2B

FIG. 3A

FIG. 3B

FIG. 3C

FIG. 4

FIG. 5A

FIG. 5B

FIG. 6A

FIG. 6B

FIG. 7B

FIG. 7A

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61541749
- US 7135992 B
- EP 2450762 A
- US 20100070078 A
- WO 7135992 A

**Non-patent literature cited in the description**

- **DAVID G. LOWE.** Local Feature View Clustering for 3D Object Recognition. *Proceedings of the IEEE Conference on Computer Vision and Pattern Recognition,* December 2001